(19) Europäisches Patentamt
European Patent Office
Office européen des brevets

(11) Publication number : **0 618 302 A1**

# (12) EUROPEAN PATENT APPLICATION

(21) Application number : **94301112.2**

(51) Int. Cl.$^5$ : **C22B 5/10,** C21B 5/00

(22) Date of filing : **16.02.94**

(30) Priority : **29.03.93 GB 9306497**

(43) Date of publication of application :
**05.10.94 Bulletin 94/40**

(84) Designated Contracting States :
**BE DE FR GB IT LU NL**

(71) Applicant : **THE BOC GROUP PLC**
**Chertsey Road**
**Windlesham, Surrey GU20 6HT (GB)**

(72) Inventor : **Satchell, Donald Prentice, JR.**
**10 Lavina Court**
**Summit, New Jersey 07901 (US)**

(74) Representative : **Wickham, Michael et al**
**c/o Patent and Trademark Department**
**The BOC Group plc**
**Chertsey Road**
**Windlesham Surrey GU20 6HJ (GB)**

## (54) Metallurgical processes and appartus.

(57) An apparatus for performing a metallurgical process comprises a main reactor (4) for performing reactions that convert carbonaceous material to a reducing gas and for melting metal, the main reactor (4) having a least one inlet (20 or 22 or 24) for the introduction of pure oxygen or oxygen-enriched air into the main reactor (4) to take part in one or more reactions ; a secondary reactor (2) separate from said main reactor for partially oxidising particulate coal to form a particulate char and a calorific gas, the second reactor (2) having an inlet (6) for said coal and an inlet (8) for oxidising gas ; and means for introducing at elevated temperature at least part of the char but none or only some of the calorific gas into the main reactor (4) so as to provide a part or all of said carbonaceous material.

FIG.1.

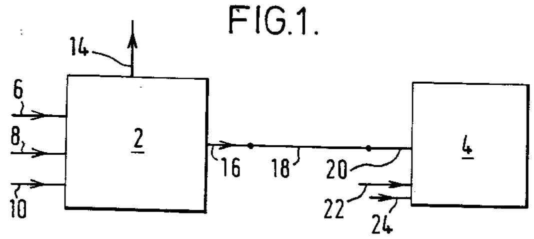


EP 0 618 302 A1

This invention relates to metallurgical processes and apparatus.

Most of the world's iron is made in blast furnaces. A blast furnace is an example of a vertical shaft furnace. The primary function of a blast furnace is to reduce iron ore to iron. A charge comprising iron ore, coke and fluxing ingredients is introduced into the furnace through its top and forms a bed. A blast of pre-heated air is used to burn coke to form carbon monoxide. The carbon monoxide reduces the iron ore to iron. The heat liberated by the combustion of the coke is used to melt the iron produced. Iron and slag are removed as molten products at the bottom of the furnace. The air blast is introduced near the bottom of the furnace so as to form a high temperature oxidation region beneath the bed. The blast may be enriched in oxygen in order to facilitate the creation of a high temperature (typically in the range of 2100 to 2200°C) in the furnace raceway. This region is sometimes referred to as the "raceway" of the furnace. It is desirable to reduce coke consumption in such a furnace. One way of achieving this end is to inject particulate coal into the furnace with the air blast. An apparatus for achieving this end is described in US patent 4 887 800. One disadvantage associated with the injection of coal into the furnace is that, relative to coke, coal requires a greater proportion of oxygen for its combustion and creates a greater thermal load on the blast furnace. Accordingly, the greater the rate at which it is chosen to inject coal into the blast furnace, the greater needs to be rate at which the blast air is enriched in oxygen to maintain in the raceway of the furnace at a temperature in the chosen range of 2100 to 2200°C. This disadvantage has restricted the use of coal in the manufacture of iron in a blast furnace or indeed in other metallurgical processes.

Various processes are known for pretreating coal so as to improve its combustion. For example, US patent 3 250 016 discloses a method of preparing coal for injection into the tuyeres of a blast furnace, comprising feeding coal fines to a fluidised bed drier, introducing the top gas from the blast furnace to the fluidised bed drier, discharging the dried coal from the drier, screen-sizing the dried coal to separate out undersized particles having a maximum size of about 3.2 mm that are suitable for injection, pulverising the oversize coal particles for further screen-sizing, and cleaning, compressing, and drying the the off-gas from the drier. This method involves drying the coal at relatively low temperatures in a reducing atmosphere. European patent application 467 375 discloses using a non-oxidising atmosphere, for example, nitrogen to dry coal. Neither US-A-3 250 016 nor EP-A-467 375 discloses the step of driving off volatile hydrocarbons from the coal in a pretreatment region, so does not therefore provide a means of overcoming the above mentioned disadvantage.

In its broadest aspect the invention provides a metallurgical process comprising performing in a main reactor reactions which convert carbonaceous material to a reducing gas, introducing pure oxygen or oxygen-enriched air into the main reactor to take part in one or more of said reactions, melting a metal in the main reactor, partially oxidising particulate coal in a secondary reactor separate from said main reactor to form a particulate char and a calorific gas, and introducing at elevated temperature at least part of the char but none or only some of the calorific gas into the main reactor, the said part of the char forming part or all of said carbonaceous material.

The invention also provides apparatus for performing a metallurgical process comprising a main reactor, for performing reactions that convert carbonaceous material to a reducing gas and for melting metal, the main reactor having at least one inlet for the introduction of pure oxygen or oxygen enriched air into the main reactor to take part in one or more of the reactions; a secondary reactor separate from said main reactor for partially oxidising particulate coal to form a particulate char and a calorific gas, the secondary reactor having an inlet for said coal and an inlet for oxidising gas; and means for introducing at elevated temperature at least part of the char but none or only some of the calorific gas into the main reactor so as to provide a part or all of said carbonaceous material.

Preferably said part of the char is fed continuously to the main reactor. The temperature at which the said part of char is fed to the main reactor is preferably substantially the same as that at which it is formed in the secondary reactor but in any event is desirably at least 150°C.

Preferably the char is separated upstream of the main reactor into a first fraction of relatively fine particles and a second fraction of relatively coarse particles. Part or preferably all of the second fraction is fed to the main reactor.

The partial oxidation of the particulate coal is preferably performed in a fluidised bed.

The fluidised bed may have a uniform gas velocity therethrough.

Alternatively, the fluidised bed may be of the crater or spouted bed column kind or otherwise be provided with one or more regions of recirculation.

It will typically be difficult to avoid passing a proportion of the calorific gas into the main reactor with said part of the char. It is desirable however to keep down the proportion of the calorific gas that is introduced into the main reactor so as to keep down the rate of consumption of oxygen in the main reactor and to avoid having to preheat such gas to the operating temperature of the main reactor. If the partial oxidation of the particulate coal is accomplished in a fluidised bed, the first fraction of char particles may be carried out of the bed in entrainment in calorific gas that is formed as a result of the partial oxidation reaction. The second fraction may be withdrawn from

the fluidised bed, for example, through one or more outlets at the side of the bed. Some calorific gas will be withdrawn with the second fraction, but the major proportion of it will tend inevitably to pass vertically upwards out of the bed.

The particulate coal may be partially oxidised in a temperature range of 400 to 1200°C. The extremes of this range are not preferred: the partial oxidation temperature is preferably in the range of 500 to 1000°C. In general, when operating the method and apparatus according to the invention to form a hot gas stream for introduction into an iron-producing blast furnace, the higher the temperature at which the char is formed, the less is the rate at which coke needs to be fed into the top of the furnace as part of the furnace charge or burden. By conducting the partial oxidation reaction at a temperature in the range of 700 to 800°C, we believe we can make possible the attainment of a considerable reduction in the rate of consumption of coke by the furnace without creating the need for any special materials in the construction of the reactor in which the partial oxidation reaction takes place. The overall partial oxidation reaction is exothermic, and the partial oxidation reactions are self sustaining once an appropriate temperature has been established in the reactor.

The oxidising gas employed in the partial oxidation reaction is preferably ambient air. If desired, the air may be preheated or enriched in oxygen. In general, however, neither oxygen enrichment of the air nor its preheating is required in order to obtain a desired partial oxidation temperature. On the contrary, depending on the proportion of volatiles in the coal, cooling of the partial oxidation reaction may be desirable in order to maintain it at a desired temperature. Such cooling may simply be effected by injecting nitrogen, water or steam into a bed in which the char is formed.

There are no special requirements for coal grinding machinery in order to prepare a particulate coal for use in the method or apparatus according to the present invention. Typically, the average particle size of the particulate coal is in the range of 1 to 3 mm. Such an average particle size can readily be achieved in conventional coal grinding machinery.

The calorific gas typically has a calorific value in the range of 4 to 5 MJ/m3, i.e. a higher calorific value than a typical blast furnace gas and is typically produced continuously at constant calorific value. The calorific gas is therefore a valuable by-product of a process according to the invention which may at least in part in another process on the site of the main and secondary reactors. If desired, the first fraction of char may be recovered from calorific gas in which it is entrained. The recovery of the first fraction may be carried out by any convenient gas-solid separation method, for example, by filtration in aqueous scrubber or in a cyclone. Water or steam may if needed be added to such calorific gas in order to reduce its temperature to a level suitable for its introduction into the cyclone.

The calorific gas separated with the first fraction may be burned and the resulting combustion product used to generate steam. It is alternatively possible to burn the calorific gas in a combustion chamber forming part of a gas turbine. If desired, heat may be recovered from the calorific gas upstream of such combustion, for example, by indirect heat exchange with a stream of pressurised nitrogen. The stream of pressurised nitrogen may downstream of such heat exchange be expanded in a turbine with the performance of external work: for example, the expansion may be performed in a turbine which is coupled to an alternator and as a result electrical power may be generated.

Any conventional means may be employed to transfer said part of the coal char from the main reactor to the secondary reactor.

In the example of production of iron in a blast furnace, particles of iron ore may be introduced into the furnace through its tuyeres. Typically, up to 10% of the total iron ore feed may be introduced through the tuyeres.

The method according to the present invention is particularly applicable to the production of a metal, for example iron, from its ore by reaction with the reducing gas. The main reactor may therefore comprise a blast furnace. The method according to the invention then comprises establishing a bed including coke and iron ore in the shaft of the furnace, and supplying a blast of hot air to an oxidation region below and contiguous to the bed, wherein said part of the char and said oxygen or oxygen-enriched air are both introduced into the oxidation region.

The method according to the invention is not however limited in application to the manufacture of iron in a blast furnace. It is also applicable to the manufacture of iron by the Corex process. In the Corex process, the main reactor comprises two separate stages. In a first stage iron is produced by reduction of iron ore with a reducing gas. In a second stage the iron is melted and coal is gasified to form the reducing gas used in the first stage. In the application of the method according to the invention the said part of the char and the oxygen-enriched air or pure oxygen ore introduced into the second stage. Accordingly, coal consumption may be reduced or the molten iron produced at a higher temperature than otherwise possible.

The main reactor may alternatively if desired be an electric arc or other melting furnace. The oxygen or oxygen-enriched air is introduced beneath the surface of a melt that is created in the furnace. The said part of the char may be introduced into the furnace as part of a charge including metal to be melted. If desired at least part of the metal may be formed in situ

by reduction of an ore of the metal.

Methods and apparatuses according to the present invention will now be described by way of example with reference to the accompanying drawings, in which:

Figure 1 is a schematic flow diagram illustrating generally a process according to the invention; and

Figure 2 is a schematic diagram illustrating a blast furnace and ancillary equipment operable in accordance with the invention.

Referring to Figure 1 of the drawings, the illustrated apparatus includes a secondary reactor 2 and a main reactor 4. Coarsely ground coal is converted in the secondary reactor 2 to a particulate char and a calorific gas mixture containing carbon monoxide and hydrogen as combustible constituents. The particulate coal, typically having an average particle size in the range of 1 to 3mm, is fed into the secondary reactor 2 through an inlet 6. Coal may be conveyed to the inlet 6 by any conventional means, typically involving pneumatic transfer in a neutral or reducing atmosphere or even in air. The coal 6 is mixed in the secondary reactor 2 with a flow of air supplied through an inlet 8. The secondary reactor 2 is maintained at such a temperature (typically in the range of 500 to 1000°C) and the relative rates of admission to the secondary reactor 2 of the coal and air are so selected that a partial oxidation of the coal takes place. The air feed to the secondary reactor 2 is typically selected so as to minimise hydrocarbon formation even at the expense of production of a calorific gas containing some 0.5 to 5 per cent by volume of carbon dioxide. A number of different chemical reactions take place. The main reactions include the evolution of volatile hydrocarbons, the oxidation of solid carbon to carbon dioxide; the oxidation of volatilised hydrocarbons to carbon dioxide and water vapour; the reduction of carbon dioxide by carbon to carbon monoxide, and the reaction of water vapour with carbon to form carbon monoxide and hydrogen. In addition, a reversible reaction between carbon monoxide and water vapour to form carbon dioxide and hydrogen also takes place. These reactions are represented by the following equations:

$$C\ (solid) + O_2 \rightarrow CO_2$$

$$Cn\ Hy\ (solid) \rightarrow Cn\ Hy\ (gas)$$

$$Cn\ Hy\ (gas) + \left(\frac{4\,n+1}{2}\right) O_2 \rightarrow nCO_2 + yH_2O$$

$$CO_2 + C \rightarrow 2CO$$

$$C + H_2O \rightarrow CO + H_2$$

$$CO + H_2O = CO_2 + H_2$$

The reactions in which elemental carbon participates proceed much more slowly than the other reactors. The predominant reactions are the evolution of hydrocarbons and the oxidation of these hydrocarbons to produce hydrogen carbon monoxide and carbon dioxide. Small amounts of various gaseous impurities such as hydrogen sulphide and ammonia may also be formed.

Depending on the composition of the coal, the temperature of the reactor 2 and the relative rates of feeding the reactants into the reactor 2, a calorific gas typically having a calorific value in the range of 4 to 5 $MJ/m^3$ is produced. A typical composition is as follows:

| | Vol % |
|---|---|
| $H_2$ | 9.4 |
| $NH_3$ | 0.4 |
| $N_2$ | 55.6 |
| $CO_2$ | 1.4 |
| CO | 26.4 |
| $H_2O(g)$ | 6.8 |
| $H_2S$ | 0.2 |

The composition of this stream is not critical.

One advantage of the method according to the invention is that this calorific gas may be produced having a calorific value greater than that of blast furnace gas. Moreover, it is generally possible to change the operation conditions in the secondary reactor 2 in response to changes in those of the primary reactor 4, while still producing calorific gas at a desired rate and at a desired calorific value. Accordingly, problems that might arise in operating downstream apparatus to burn the gas as a result of fluctuating calorific value are minimised.

If desired, the air fed to the secondary reactor 2 through the inlet 8 may be preheated although this is generally not necessary since the preferred reaction temperatures can generally be maintained without such preheating owing to the net exothermic nature of the chemical reactions involved. Alternatively, although it is possible to enrich the air with oxygen by introducing commercially pure oxygen (or oxygen-enriched air) into the secondary reactor 2 through an inlet 10 (or by premixing such oxygen with the air upstream of the inlet 8) this measure is also not preferred for the same reason. It is also possible to add water or steam as a reactant from an external source through the inlet 6. Alternatively, the water or steam may be premixed with the air at or upstream of the inlet 8. The water or steam also functions as a temperature moderator and its controlled addition may provide a technique for regulating the temperature in the reactor 2.

The secondary reactor 2 may take any one of a number of different forms. It is however preferred that the resulting char be separated into a first fraction of relatively fine particles and a second fraction of relatively coarse particles in the secondary reactor 2 itself rather than in a separate vessel. Accordingly, the partial oxidation of the incoming coal particles is preferably performed in a bed and gaseous combustion products flowing out of the bed elutriate the finest particles of resulting char. Such particles may typically have sizes in the range of 0.1mm to less than or equal to 400 mesh (US mesh size?). A residual fraction of relatively coarse particles is thus left in the bed and may be withdrawn therefrom intermittently or, preferably, continuously.

The bed of particulate char formed in the secondary reactor 2 is preferably a fluidised bed. The secondary reactor 2 is preferably shaped so as to encourage a relatively long residence time of char in the bed to facilitate the complete devolatilisation of the coal and the withdrawal of the second fraction comprising coarse particles of char. In order to obtain a relatively long residence time, the fluidised bed preferably has an expansion of 10 to 30% of the unfluidised bed volume, and may be of the spouted bed or crater bed kind or otherwise provide for recirculation of gas and particles within the bed.

A first stream of calorific gas is withdrawn from the top of the secondary reactor 2 through an outlet 14. This stream has entrained in it the first fraction of the particles of coal char. A second stream of calorific gas is withdrawn from the side of the secondary reactor 2 through an outlet 16. The second fraction of coal char is withdrawn with the second stream of calorific gas through the outlet 16. Typically, the first fraction constitutes less than 10% by weight of the total weight of the first and second fractions. This is because only fine particles of char are carried out of the reactor 2 with the first stream of calorific gas. The rate of flow of the first stream of calorific gas out of the secondary reactor 2 is arranged to be substantially in excess of that of the second stream of calorific gas.

The first stream of calorific gas may be put to any one of a number of different uses. For example, it may be eventually burned and the resulting combustion products used to raise steam. It may also be used in the direct reduction of iron. The first stream of calorific gas may have sensible heat recovered therefrom in a heat exchanger (not shown in Figure 1) and may if desired have the first fraction of char particles disengaged therefrom in a cyclone (also not shown in Figure 1). (Alternatively, the char particles may be separated by filtration or in an aqueous scrubber.) In addition, the first stream of gas may be treated upstream of its combustion to remove oxides of nitrogen and sulphur therefrom and to dry it. The calorific gas is typically produced over a period of time to a constant calorific value.

In order to start up operation of the reactor 2, it may be preheated to a desired operating temperature using one or more burners (not shown). Once the desired operating temperature has been achieved operation of the burners is stopped.

It is desirable to withdraw the second fraction of particulate char continuously from the secondary reactor 2 to enable it to be introduced continuously into the main reactor 4 at substantially the same temperature as that at which it leaves the secondary reactor 2. The main reactor 4 may for example be provided by the gasifier/melter of a Corex plant, a metal melting furnace, for example, an electric arc furnace, or a metal ore smelting furnace. The method according to the invention is however particularly suited for operation of a blast furnace. Thus, the main reactor 4 may be a blast furnace. The main reactor 4 typically operates at a substantially higher temperature than the reactor 2. In the example of a blast furnace used to make iron, a maximum temperature in the range of 2100 to 2200°C is created. Accordingly, the second fraction of particulate coal char is preferably fed directly through an inlet or inlets 20 to the reactor 4 via a conduit 18 without any prolonged dwell time during which it might lose sensible heat. Since the second fraction of char is produced in the reactor 2 at an elevated temperature, it is preferably conveyed to the inlet or inlets 20 in a reducing or neutral gaseous medium so as to minimise fire or explosion hazards. The second stream of calorific gas withdrawn from the reactor 2 through the outlet 16 may be used as the carrier gas. If desired, the flow of the second fraction from the reactor 2 to the reactor 4 may be assisted by gravity.

In operation of the main reactor 4, when it is a blast furnace, a bed (not shown) typically comprising coke and typically iron ore is maintained therein. The second fraction of particulate char particles enters the main reactor 4 in essentially a gaseous oxidising or flame region below the bed. The char particles are therefore rapidly burned to form carbon dioxide. Some ash is also formed. The carbon dioxide will itself rapidly react with carbon to form carbon monoxide which in the example of the manufacture of iron reduces iron ore to metallic iron. These basic reactions are in accordance with the following equations:

$$C + O_2 = CO_2$$

$$CO_2 + C = 2CO$$

$$2F_2O_3 + 3CO = 2Fe + 3CO_2$$

As will be well understood by those skilled in the art of blast furnace operation, a number of other chemical reactions take place in the blast furnace. In essence, however, the products of the blast furnace are molten iron and a slag withdrawn from the bottom of the furnace and a reducing gas withdrawn from the top of the furnace.

In order to obtain the necessary high temperature combustion conditions within the reactor 4, a blast of air is provided to the reactor 4 through an inlet 22. The air is preferably preheated to a temperature in the range of 1000 to 1200°C. In addition, a stream of pure oxygen or oxygen-enriched air (preferably at least

90% pure) is injected into the reactor 4 through an inlet or inlets 24. Typically, there may be a plurality of tuyeres (not shown in Figure 1) associated with the reactor 4, each tuyere having separate passages corresponding to an inlet 20, an inlet 22 and an inlet 24. Alternatively, the oxygen may be pre-mixed with the air. Typically, the relative rates of passage of air and oxygen into the reactor 4 are such that, in effect, the concentration of oxygen in the air is raised to a value in the range of 25 to 30% by volume.

Since the char is essentially devolatilised in the secondary reactor 2 the demand for oxygen in the main reactor 4 for its total combustion is less than would be required were the total requirement for carbon to be met wholly by the supply of coal. Further, the thermal load on the main reactor 4 is reduced mainly as a result of the devolatilisation in the secondary reactor 2 but also since the char is supplied to the main reactor 4 at elevated temperature. A further advantage that arises from the operation of the secondary reactor 2 is that evolution of volatile hydrocarbons takes place there and not in the main reactor 4. By excluding most of these volatile hydrocarbons from the main reactor 4 deposition there of soot as a result of the decomposition of such volatile hydrocarbons is kept down. Such deposition may in a blast furnace reduce the permeability of the charge therein with the result that its efficient operation is impaired. Further, separation of the finest particles of char upstream of the main reactor 4 prevents carry-over of these particles into the reactor 4.

Referring now to Figure 2 of the drawings, coal is fed through an inlet 34 into a fluidised bed reactor 30 in which a fluidised bed 32 having a dense phase is maintained at a temperature of 750°C. The coal is typically fed into the reactor in suspension in nitrogen gas or air. Typically about 1 part by weight of nitrogen is used per 23.3 parts by weight of coal (or in volumetric terms 3 parts of nitrogen to 1 part of coal). The nitrogen carrier gas is typically employed at a pressure in the order of 3 to 6 bar absolute.

The bed 32 is fluidised by a stream of air introduced into the bottom of the reactor 30 through an inlet 36. The air supply pressure is typically in the order of 3 to 6 bars absolute. Typically, the mass ratio of the ratio of introduction of air into the reactor 30 to that of the coal is in the order of 1 to 1.4. Under such operating conditions, it is typically desirable to introduce water into the reactor 30 so as to maintain the temperature therein at the chosen temperature of 750°C. Accordingly, water or steam may be added to the nitrogen gas in which the coal is carried. If desired, the rate of addition of the water may be controlled by a temperature sensor (not shown) which measures the temperature of the bed 32. In the bed 32 a series of reactions takes place of the kind outlined above with reference to the reactor 2 shown in Figure 1 and the net effect is that the coal is devolatilised and converted to a char while at the same time a calorific gas is formed comprising principally nitrogen, hydrogen, carbon monoxide, carbon dioxide and water vapour. Typically, the coal undergoes a loss of some 20 to 60% of its weight by virtue of its devolatilisation in the reactor 30 depending on the composition of the coal. The calorific gas typically has a calorific value of about 4.2 $MJ/m^3$ though the presence of any unburned hydrocarbons could substantially increase its calorific value. Most of the resulting calorific gas passes through the top of the fluidised bed 32 and out of the reactor 30 through an outlet 40. This gas flow constitutes a first stream of calorific gas. The first gas stream has entrained in it a first fraction comprising fine particles of coal char which are elutriated from the bed 32. A second fraction of coal char is withdrawn from the bed 32 through an outlet 42 at a level above that of the inlet 34. Some of the calorific gas formed in the bed 32 flows out of it through the outlet 42 as a second stream with the second fraction of coal char. Typically, about 99% by weight of the coal char formed in the reactor 30 is taken as the second fraction and about 1% by weight as the first fraction; and at least 75% of the gaseous products of combustion flow out of the reactor 30 through the outlet 40. The first stream of calorific gas flows to a cyclone 44 in which the particles of char entrained in it are disengaged therefrom. The resulting fine carbon product may, for example, be burned to generate heat. (If desired, however, the cyclone may be omitted.) The first calorific gas stream from which the particles of carbon have been disengaged flows to a scrubbing unit 46 to remove impurities such as oxides of sulphur and oxides of nitrogen therefrom. The unit 46 may also include a condenser operable to free the gas stream of most of its content of water vapour. The resultant cleaned gas may then flow to a boiler 48 in which it is used raise steam. Alternatively, it may be passed to the combustion chamber of a gas turbine (not shown) and the resulting combustion products expanded. The gas turbine may be used to generate electrical power.

The second fraction of relatively coarse particles of coal char withdrawn from the reactor 30 through the outlet 42 is conveyed to the tuyeres 52 of a blast furnace 50. (Only one such tuyere 52 is shown in Figure 2.) The coal char is thus injected through the tuyeres 52 into a raceway 54 in the furnace 50. The raceway is contiguous to a bed or burden 56 comprising coke, iron oxide, and limestone or other fluxing ingredients.

The tuyeres 52 are also fed from a pipeline 58 with a stream of air preheated to a temperature of 1100°C and from a pipeline 60 with a stream of oxygen containing up to 10% by volume of gaseous impurities. The particles of char are kept separate from the oxygen and preheated air until they enter the raceway 54 of the furnace 50. A relatively intense combustion takes place in the raceway 54 and a temperature of about 2160°C is typically obtained. In such an environment a major proportion of the particles of char are converted to ash and gaseous combustion products. The primary reactions that take place in the raceway 54 and the burden 56 are as follows:

$$C + O_2 = CO_2$$
$$C + CO_2 = 2CO$$
$$CO + FeO = CO_2 + 2Fe$$

It is to be appreciated that several other reactions take place including those involving water vapour and hydrogen.

In essence, the operation of the blast furnace 50 is largely conventional. Iron formed as a result of the reduction of iron ore by carbon monoxide is melted as a result of the intense heat created by combustion of carbon in the raceway and the resulting molten iron may be tapped off the bottom of the furnace through an outlet 62. In addition, a molten slag collects on the surface of the molten iron and may be tapped off through an outlet 64. Since the bottom of the burden 56 is continuously consumed in the intense combustion region created in the raceway 54, fresh charge is from time to time loaded into the shaft of the furnace 50 through its top. In addition, blast furnace gas flows out of the top of the furnace 50 and may be collected.

Although as stated above the operation of the blast furnace 50 is essentially conventional, certain changes are made possible by the injection of the particles of char into the furnace 50 through the tuyeres 52. In particular, the rate of consumption of coke is reduced. For example, a blast furnace which is normally fed with coke at a rate of 480 kg per tonne and coal at a rate of 60 kg per tonne of hot metal produced may for example have its coke feed rate reduced to about 360 kg per tonne of hot metal when char is injected into the furnace 50 through the tuyeres 52 at a temperature of 750°C and oxygen is introduced into the furnace 50 at a rate of 50 kg of oxygen per tonne of hot metal (such oxygen introduction rate amounting to 8% of the total flow of oxygen molecules into the furnace through the tuyeres). The calorific value of the blast furnace gas produced under these conditions is in the order of 2.5MJ/m$^3$.

If it is desired to enhance the calorific value of the blast furnace gas, iron ore may additionally be injected into the raceway 54 of the furnace 50 through the tuyeres 52. Typically, up to 5% of the total iron ore feed may be so injected. With a char feed temperature of 750°C and a rate of introducing oxygen to enrich the air blast equivalent to 100 kg of oxygen per tonne of hot metal, it is possible to increase the calorific value of the blast furnace gas to nearly 3MJ/m$^3$.

## Claims

1. A metallurgical process characterised by performing in a main reactor reactions which convert carbonaceous material to a reducing gas, introducing pure oxygen or oxygen-enriched air into the main reactor to take part in one or more of said reactions, melting a metal in the main reactor, partially oxidising particulate coal in a secondary reactor separate from said main reactor to form a particulate char and a calorific gas, and introducing at elevated temperature at least part of the char but none or only some of the calorific gas into the main reactor, the said part of the char forming part or all of said carbonaceous material.

2. A process according to claim 1, characterised in that the said part of the char is introduced continuously into the main reactor.

3. A process according to claim 1 or claim 2, further characterised in that the char is separated upstream of the main reactor into a first fraction of relatively fine particles and a second fraction of relatively coarse particle, and at least part of the second fraction is fed to the main reactor.

4. A process according to any one of claims 1 to 3, further characterised in that all of the second fraction is fed to the main reactor.

5. A method as claimed in claim 3 or claim 4, further characterised in that the first fraction of char particles is carried out of the bed in a major stream of said calorific gas and a minor stream of said calorific stream is withdrawn with the second fraction.

6. A method as claimed in any one of the preceding claims, further characterised in that the partial oxidation is performed in a fluidised bed.

7. A method as claimed in claim 6, further characterised in that the fluidised bed has an expanded volume from 10 to 30% greater than its unexpanded volume.

8. A method as claimed in any one of claims 1 to 5, further characterised in that the fluidised bed has at least one recirculation region.

9. A process as claimed in any one of the preceding claims, further characterised in that the partial oxidation is performed at a temperature in the range of 500 to 1000°C.

10. A process as claimed in claim 9, further characterised in that the temperature is in the range of 700 to 800°C.

11. A process as claimed in any one of the preceding

claims, further characterised in that air is employed in the partial oxidation of the coal.

**12.** A process as claimed in any one of the preceding claims, further characterised in that steam, nitrogen or water is employed in the partial oxidation of the coal to moderate the temperature.

**13.** A process as claimed in any one of the preceding claims, further characterised in that the average particle size of the particulate coal in the range of 1 to 3mm.

**14.** A process according to any one of the preceding claims, further characterised in that the calorific gas has a constant calorific value.

**15.** A process according to any one of the preceding claims, further characterised by the step of continuously feeding at least part of the calorific gas to another process on the same site as the first and second reactors.

**16.** A process according to any one of the preceding claims, further characterised in that the metal is formed in the main reactor by reaction of an ore of the metal with the reducing gas.

**17.** A process according to claim 16, further characterised in that the metal is iron.

**18.** A process according to claim 17, further characterised in that the main reactor is a blast furnace.

**19.** A process according to claim 18, further characterised by the step of establishing a bed including coke and iron ore in the shaft furnace, and supplying a blast of hot air to an oxidation region below and contiguous to the bed, wherein said part of the char and said oxygen or oxygen-enriched air are introduced into the oxidation region.

**20.** A process according to claim 19, further characterised in that particulate iron ore is injected into the oxidation region.

**21.** A process according to claim 17, further characterised in that the main reactor is a gasifier-melter.

**22.** A metallurgical process as claimed in any one of claims 1 to 16, further characterised in that the main reactor is a metal melting or smelting furnace.

**23.** Apparatus for performing a metallurgical process comprising a main reactor (4) for performing reactions that convert carbonaceous material to a reducing gas and for melting metal, the main reactor (4) having at least one inlet (20 or 22 or 24) for the introduction of pure oxygen or oxygen-enriched air into the main reactor (4) to take part in one or more of the reactions; a secondary reactor (2) separate from said main reactor for partially oxidising particulate coal to form a particulate char and a calorific gas, the secondary reactor (2) having an inlet (6) for said coal and an inlet (8) for oxidising gas; and means for introducing at elevated temperature at least part of the char but none or only some of the calorific gas into the main reactor (4) so as to provide a part or all of said carbonaceous material.

**24.** Apparatus as claimed in claim 23, characterised in that said reactor (4) is adapted to contain a fluidised bed in which said partial oxidation can be performed.

FIG.1.

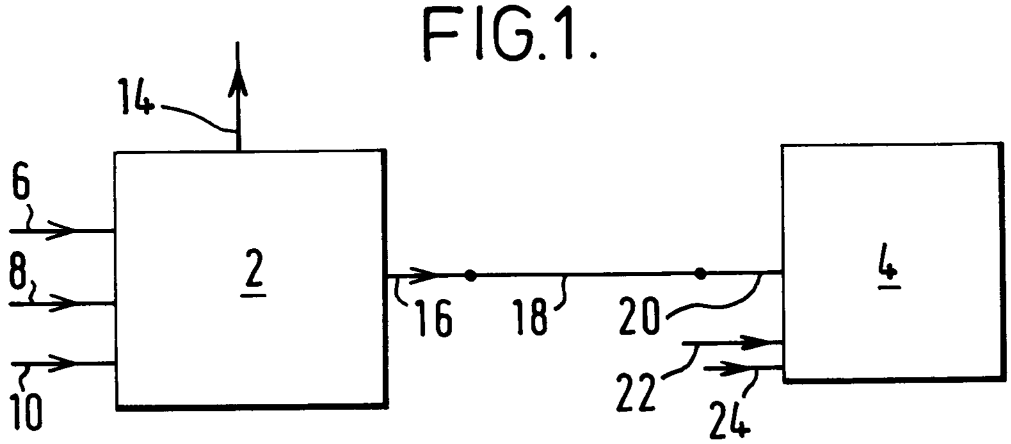
14
6
8
10
2
16
18
20
4
22
24

FIG.2.

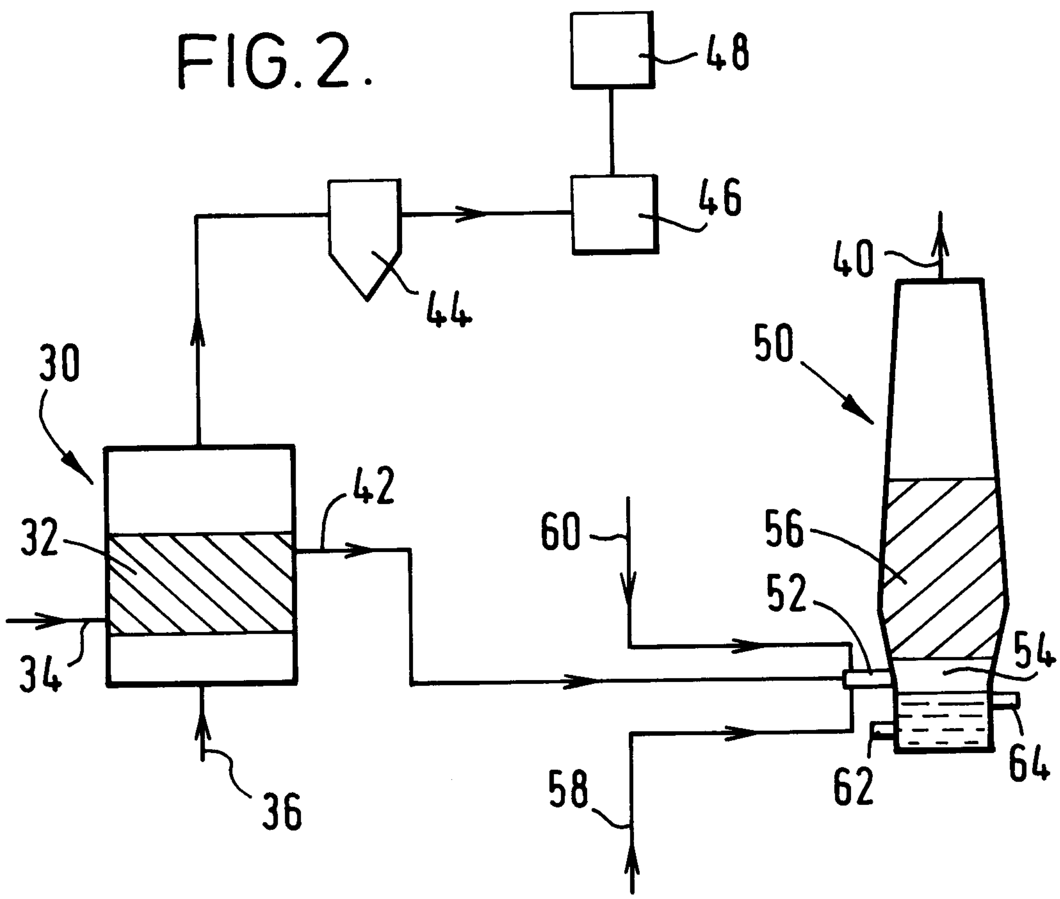
48
46
44
40
30
50
42
32
60
56
52
34
54
62
64
36
58

European Patent Office

# EUROPEAN SEARCH REPORT

Application Number
EP 94 30 1112

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A,D | US-A-4 887 800 (H.HOTTA ET AL.)<br>--- | | C22B5/10<br>C21B5/00 |
| A,D | US-A-3 250 016 (J.C.AGARWAL)<br>--- | | |
| A,D | EP-A-0 467 375 (KAWASAKI STEEL ET AL.)<br>--- | | |
| X | BE-A-684 570 (SALZGITTER HÜTTENWERK)<br>* page 7; figure *<br>--- | 1-19 | |
| A | US-A-4 260 412 (F.V.SUMMERS ET AL.)<br>* column 3, line 16 - line 20 *<br>--- | 13 | |
| A | US-A-4 806 158 (M.HIRSCH ET AL.)<br>* claim 16; figure *<br>--- | 22 | |
| A | IRON AND STEEL ENGINEER,<br>vol.67, no.6, June 1990, PITTSBURGH US<br>pages 21 - 25<br>W.MASCHLANKA ET AL. 'Corex technology .....'<br>----- | | TECHNICAL FIELDS SEARCHED (Int.Cl.5)<br>C22B<br>C21B |

The present search report has been drawn up for all claims

| Place of search | Date of completion of the search | Examiner |
|---|---|---|
| BERLIN | 17 May 1994 | Sutor, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)